# EUROPÄISCHE PATENTSCHRIFT

(11) **EP 0 992 526 B1**
(45) Veröffentlichungstag und Bekanntmachung des Hinweises auf die Patenterteilung: **13.06.2001**
(21) Anmeldenummer: 99116837.8
(22) Anmeldetag: 02.09.1999
(51) Int. Cl.: C08G 77/04, C08G 77/06, C07F 7/08

(54) **Verfahren zur Herstellung von Mischungen linearer Organopolysiloxane**
Process for preparing mixtures of linear polysiloxanes
Procédé de préparation de mélanges de polysiloxanes linéaires

(30) Priorität: 08.10.1998 DE 19846397
(43) Veröffentlichungstag der Anmeldung: 12.04.2000
(73) Patentinhaber: Wacker-Chemie GmbH, 81737 München (DE)
(72) Erfinder: Köhler, Thomas, Dr., 84556 Kastl (DE); Meisenberger, Manfred, 84489 Burghausen (DE)
(74) Vertreter: Fritz, Helmut, Dr.

(56) Entgegenhaltungen:
- EP-A- 0 485 977
- EP-A- 0 515 082
- DE-A- 1 937 736
- US-A- 2 832 794
- US-A- 5 476 916
- KOPYLOV V M ET AL: "FEATURES OF INFLUENCE OF HC1 ON HYDROLYTIC COPOLYCONDENSATION OF BIFUNCTIONAL ORGANOCHLOROSILANES WITH TRIMETHYLCHLOROSILANE" JOURNAL OF GENERAL CHEMISTRY USSR, Bd. 61, Nr. 6, 1. Juni 1991 (1991-06-01), Seiten 1257-1261, XP000274401
- V.M.KOPYLOV: "effect of hydrochloric acid on hydrolytic copolycondensation of dimethyldichlorosilane with trimethylchlorosilane." POLYMER SCIENCE USSR, Bd. 28, Nr. 7, 1986, Seiten 1630-1638, XP002120279

## Beschreibung

Die Erfindung betrifft ein Verfahren zur Herstellung von Gemischen linearer Organopolysiloxane.

Die Herstellung von Organopolysiloxanen durch Hydrolyse und Kondensation von Halogensilanen ist bekannt. Auch geht man zur Herstellung von Organopolysiloxanen häufig von Mischungen niedermolekularer und hochmolekularer Organopolysiloxane aus, die durch Zugabe eines geeigneten Katalysators zu Mischungen niedrigen Molekulargewichtes äqulibriert werden. Die Herstellung von Organopolysiloxanen mit sehr geringem Kondensationsgrad ist jedoch auf letztere Weise nicht hinreichend lösbar. Auch werden bei den bekannten Herstellverfahren besonders die Bildung cyclischer Organopolysiloxane mit einer Ringgröße von 3 bis 6 Siloxaneinheiten angestrebt.

Kontinuierliche Verfahren zur direkten Herstellung von Mischungen linearer niedermolekularer Siloxane mit geringem Anteil an Hexamethyldisiloxan und cyclischen Siloxanen sind bisher nicht bekannt, die Zielprodukte können aber durch Mischen der einzelnen Komponenten sehr zeit- und kostenintensiv hergestellt werden.

Ein kontinuierliches Verfahren zur Hydrolyse von. Organochlorsilanen ist in der DE-PS 954 198 beschrieben. Die Reaktion wird dabei in einem loop-Reaktor durchgeführt. Die Konzentration der abfließenden Salzsaüre beträgt mindestens 25 %. Diese hohe Konzentration führt zu einem Rohhydrolysat mit nicht hydrolysierten und unerwünschten Si-Cl-Einheiten.

In Kopylov V. M. et al: "Features of Influence of HCl on Hydrolytic Copolycondensation of Bifunctional Organochlorosilanes with Trimethylchlorosilane", Journal of General Chemistry USSR, Bd. 61, Nr. 6, 1. Juni 1991 (1991-06-01), Seiten 1257-1261, XP000274401, ist ein diskontinuierliches Verfahren zur hydrolytischen Cokondensation von Trimethylchlorsilan mit Dimethylchlorsilan beschrieben.

Der Erfindung liegt die Aufgabe zugrunde, ein Verfahren zur Verfügung zu stellen, welches die kostengünstige Produktion von linearen, niedermolekularen Organopolysiloxanen mit definierter Zusammensetzung und einem verringerten Anteil an Hexamethyldisiloxan ermöglicht, bei dem möglichst wenig cyclische, niedermolekulare Organopolysiloxane und Organopolysiloxane mit Si-Cl-Einheiten gebildet werden.

Gegenstand der Erfindung ist ein Verfahren zur Herstellung von Gemischen linearer Organopolysiloxane der allgemeinen Formel 1

(CH₃)₃SiO-(Si(CH₃)₂O)ₙ-Si (CH₃)₃ (1),

in der
- n: die Werte 0 oder eine ganze Zahl von 1 bis 50 bedeuten, bei dem Trimethylchlorsilan und Dimethyldichlorsilan mit gegebenenfalls salzsaurem Wasser umgesetzt werden, wobei die Konzentration an HCl in der abgeführten Salzsäure weniger als 25 Gew.-% beträgt,
dadurch gekennzeichnet, daß die Umsetzung in einem geschlossenen Umlaufsystem kontinuierlich durchgeführt wird, aus den abgeführten Organopolysiloxanen der allgemeinen Formel 1 ein Teil der niedermolekularen linearen Organopolysiloxane durch Destillation entfernt wird und die Gemische linearer Organopolysiloxane 0 bis 60 Prozent an Organopolysiloxanen der allgemeinen Formel 1 aufweisen, bei denen n den Wert 0 bedeutet und höchstens 1 Gew.-% an cyclischen, niedermolekularen Organopolysiloxanen enthalten.

Mit dem vorliegenden Verfahren werden Anteile an cyclischen, niedermolekularen Organopolysiloxanen im Produkt von insbesondere höchstens 0,5 Gew.-% erreicht.

Vorzugsweise bedeutet **n** Werte von höchstens 20, insbesondere höchstens 10.

Die Gemische weisen vorzugsweise nachstehende Zusammensetzung auf:
n = 1: Der Anteil beträgt 0 bis 99 Prozent, besonders bevorzugt 10 bis 70 Prozent, insbesondere 20 bis 65 Prozent.
n = 2: Der Anteil beträgt 0 bis 99 Prozent, besonders bevorzugt 5 bis 50 Prozent, insbesondere bevorzugt 10 bis 35 Prozent.
n = 3: Der Anteil beträgt 0 bis 99 Prozent, besonders bevorzugt 0 bis 20 Prozent, insbesondere 2 bis 15 Prozent.
n = 4: Der Anteil beträgt 0 bis 99 Prozent, besonders bevorzugt 0 bis 10 Prozent, insbesondere 0 bis 5 Prozent.
n = 5: Der Anteil beträgt 0 bis 99 Prozent, besonders bevorzugt 0 bis 5 Prozent, insbesondere 0 bis 3 Prozent.
n = 6: Der Anteil beträgt 0 bis 99 Prozent, besonders bevorzugt 0 bis 5 Prozent, insbesondere 0 bis 2 Prozent.
n = 7: Der Anteil beträgt 0 bis 99 Prozent, besonders bevorzugt 0 bis 5 Prozent, insbesondere 0 bis 2 Prozent.
n = 8: Der Anteil beträgt 0 bis 99 Prozent, besonders bevorzugt 0 bis 5 Prozent, insbesondere 0 bis. 1 Prozent.
n = 9: Der Anteil beträgt 0 bis 99 Prozent, besonders bevorzugt 0 bis 5 Prozent, insbesondere 0 bis 0,5 Prozent.
n = 10: Der Anteil beträgt 0 bis 99 Prozent, besonders bevorzugt 0 bis 5 Prozent, insbesondere 0 bis 0,5 Prozent.

Trimethylchlorsilan und Dimethyldichlorsilan werden im Verfahren bevorzugt stöchiometrisch molar eingesetzt. Bevorzugt sind dabei Mengenverhältnisse von Trimethylchlorsilan:Dimethyldichlorsilan von 20 : 1 bis 1 : 1. Es können aber auch davon abweichende Mengen an Organochlorsilanen eingesetzt werden.

Das Verfahren wird vorzugsweise bei Temperaturen von 20 bis 150°C, insbesondere von 30 bis 100°C durchgeführt. Vorzugsweise wird beim Druck der umgebenen Atmosphäre, also bei 1020 hPa (abs.) oder etwa 1020 hPa (abs.) gearbeitet. Falls erwünscht, können jedoch auch höhere oder niedrigere Drücke, bevorzugt von 100 bis 10000, insbesondere bis 6000 hPa (abs.) angewendet werden.

Bei der Umsetzung finden Hydrolyse mit Wasser und Kondensation von Trimethylchlorsilan und Dimethyldichlorsilan gleichzeitig statt. Im geschlossenen Umlauf system wird das Reaktionsgemisch vorzugsweise durch eine Pumpe umgewälzt. Kontinuierlich zugeführt werden Frischwasser und die Organochlorsilane. Aus dem Prozeß werden ebenfalls kontinuierlich ein entsprechender Teil der Reaktionsmischung aus Organopolysiloxanen der allgemeinen Formel 1 und mit Säure angereichertem Wasser abgeführt und aufgetrennt.

Die Konzentration an HCl in der abgeführten Salzsäure beträgt vorzugsweise 18 bis 24 Gew.-%, insbesondere 20 bis 23 Gew.-%. Die bei der Hydrolse der Organochlorsilane gebildete HCl wird durch Dosierung von Wasser zu einer wäßrigen Salzsäure umgesetzt und so die Konzentration der im Reaktionsgefäß befindlichen Salzsäure bevorzugt konstant gehalten.

Gegebenenfalls werden aus den abgeführten Organopolysiloxanen der allgemeinen Formel 1, ein Teil der niedermolekularen linearen Organopolysiloxane, insbesondere bei denen n = 0, durch diskontinuierliche oder kontinuierliche Destillation befreit, so daß einen definierte Mischung niedermolekularer, linearer Organosiliciumverbindungen entsteht. Insbesondere werden so Gemische hergestellt, welche durch direkte kontinuierliche Hydrolyse und Kondensation nicht zugänglich sind.

Das bei der Destillation erhaltene Destillat kann gegebenenfalls als Mischung mit Trimethylchlorsilan und Dimethyldichlorsilan in das Umlaufsystem zurückgeführt werden. Vorzugsweise wird das Destillat katalytisch rückgespalten, insbesondere am Kohleturm. Das erhaltene Spaltprodukt wird dann vorzugsweise gegebenenfalls als Mischung mit Trimethylchlorsilan und Dimethyldichlorsilan in das Umlaufsystem zurückgeführt.

In den nachstehend beschriebenen Beispielen beziehen sich alle Angaben von Teilen und Prozentsätzen, falls nicht anders angegeben, auf das Gewicht. Sofern nicht anders angegeben, wurden die nachstehenden Beispiele bei einem Druck der umgebenden Atmosphäre, also etwa 1000 hPa durchgeführt.

### Beispiele:

### Anlage zur Herstellung der Rohhydrolysate:

Die eingesetzte loop-Anlage besteht aus einer Kreiselpumpe mit einer Förderleistung von 500 ltr. je Stunde, einem Kühler mit einer Kühlfläche von 0,12 m² und einem T-Stück zum Ausschleusen von Rohprodukt und wäßriger Salzsäure. Die Komponenten sind durch Rohrleitungen mit einer Nennweite von 40 mm miteinander verbunden: Druckseite der Pumpe mit dem T-Stück und dessen unteres Ende mit der Saugseite der Pumpe. In diesen Kreislauf werden 7 ltr. 21 %ige Salzsäure gepumpt. Durch zwei zwischen T-Stück und Pumpe einmündende Zulaufleitungen werdem dem Kreislauf kontinuierlich pro Stunde 1,8 kg Silangemisch und 2,5 kg Wasser zugespeist. Die Verweilzeit zwischen Silaneinspeisestelle und T-Stück
beträgt ca. 50 Sekunden. Nach kurzer Betriebsdauer stellt sich eine konstante Temperatur der umlaufenden Flüssigkeit von 50°C ein, ihre HCl-Konzentration bleibt bei 21 %.

Die Flüssigkeit wird aus dem oberen Teil des T-Stücks in die Mitte eines Hauptabscheiders geleitet, in welchem die vollständige Trennung in wäßrige und organische Phase erfolgt. Letztere fällt dabei mit einem Restsäuregehalt von ca. 200 ppm an. Gegebenfalls kann das so erhaltene organische Rohhydrolysat durch Waschen mit Wasser auf einen Restsäuregehalt von < 5 ppm gebracht werden.

Durch das molare Mischungsverhältnis von Trimethylchlorsilan (= M3) und Dimethyldichlorsilan (= M2) läßt sich die Zusammensetzung des Rohhydrolysate steuern. Dabei werden im Rohhydrolysat die in der folgenden Tabelle zusammengefaßten Gewichtsverhältnisse an niedermolekularen, linearer Organosiliciumverbindungen in Abhängigkeit von der Zusammensetzung der eingesetzten Silan-Mischung gefunden.

| **M3/M2** | **2/1** | **4/1** | **6/1** | **8/1** |
|---|---|---|---|---|
| Si2 | 36,00 | 54,00 | 61,00 | 69,00 |
| Si3 | 24,00 | 26,00 | 25,00 | 24,00 |
| Si4 | 17,00 | 13,00 | 10,00 | 5,00 |
| Si5 | 9,00 | 4,00 | 2,50 | 1,00 |
| Si6 | 5,00 | 1,00 | 0,70 | 0,10 |
| Si7 | 3,00 | 0,50 | 0,40 | - |
| Si8 | 1,00 | 0,10 | - | - |
| D4 | 1,00 | 0,20 | 0,10 | - |
| Angaben in Gewichtsprozent aus GC | | | | |

Das wie oben beschrieben erzeugte Rohhydrolysate wird nach der kontinuierlichen Hydrolyse und Kondensation gegebenenfalls von einem Teil der gebildeten niedermolekularen flüchtigen Siloxane durch diskontinuierliche oder kontinuierliche Destillation befreit, wobei sich durch die Wahl des Destillationsequipmentes und der Destillationsparameter prinzipiell jede denkbare Produktzusammensetzung einstellen läßt.

Als Beispiel ist hier die Destillation des in der oben aufgeführten Tabelle in der Spalte 4/1 beschriebenen Rohhydrolysates angeführt. Das erhaltene Rohprodukt wird durch Destillation von der Hauptmenge des bei der Hydrolyse/Kondensation gebildeten Hexamethyldisiloxans befreit.

### Anlage zur Destillation der Rohhydrolysate:

Die eingesetzte Destillationsapparatur besteht aus einem 2 ltr.
Dreihals-Glaskolben, der mit einem Thermometer versehen ist und durch einen Heizpilz beheizt wird. Als Aufsatz trägt er eine 40 cm lange Spiegelglaskolonne, die mit 6 mm Raschigringen befüllt ist. Auf diese Kolonne ist ein Rückflußkühler mit Destillatabnahme aufgesetzt. Diese ermöglicht die Einstellung des Rücklaufverhältnisses zur Erhöhung der Trennleistung der Kolonne und ermöglicht die Destillatabnahme.

Der Destillationskolben wir mit ca. 1,5 ltr. des nach oben beschriebener Vorschrift hergestellten Rohhydrolysates befüllt. Anschließend wird Hexamethyldisiloxan destillativ abgetrennt. Dabei läßt sich der Gehalt an Hexamethyldisiloxan im verbleibenden Rückstand durch die bei der Destillation maximal eingestellt Rührguttemperatur steuern.
Prinzipiell führt eine Erhöhung der Rührguttemperatur zu einem geringeren Gehalt an Hexamethyldisiloxan im verbleibenden Rückstand.

| **M3/M2** | **4/1** | **Dest. 1** | **Dest. 2** | **Dest. 3** | **Dest. 4** | **Dest. 5** | **Dest. 6** | **Dest. 7** |
|---|---|---|---|---|---|---|---|---|
| Si2 | 54,00 | 49,00 | 44,00 | 35,00 | 30,00 | 20,00 | 9,00 | 6,00 |
| Si3 | 26,00 | 28,00 | 31,00 | 30,00 | 36,00 | 42,00 | 51,00 | 52,00 |
| Si4 | 13,00 | 14,00 | 17,00 | 21,00 | 22,00 | 24,00 | 26,00 | 27,00 |
| Si5 | 4,00 | 5,00 | 5,00 | 9,00 | 8,00 | 9,00 | 9,00 | 9,00 |
| Si6 | 1,00 | 1,40 | 1,50 | 3,00 | 2,30 | 3,00 | 3,00 | 4,00 |
| Si7 | 0,50 | 0,50 | 0,70 | 1,00 | 0,80 | 1,00 | 1,00 | 1,00 |
| Si8 | 0,10 | 0,20 | 0,20 | 0,30 | 0,30 | 0,30 | 0,20 | 0,30 |
| D4 | 0,20 | 0,30 | 0,50 | 0,50 | 0,40 | 0,50 | 0,50 | 0,50 |
| Angaben in Gewichtsprozent aus GC | | | | | | | | |

## Patentansprüche

1. Verfahren zur Herstellung von Gemischen linearer Organopolysiloxane der allgemeinen Formel 1
(CH₃)₃SiO- (Si (CH₃)₂O)ₙ-Si (CH₃)₃ (1),
in der
**n** die Werte 0 oder eine ganze Zahl von 1 bis 50 bedeuten, bei dem Trimethylchlorsilan und Dimethyldichlorsilan mit gegebenenfalls salzsaurem Wasser umgesetzt werden, wobei die Konzentration an HCl in der abgeführten Salzsäure weniger als 25 Gew.-% beträgt,
dadurch gekennzeichnet, daß die Umsetzung in einem geschlossenen Umlaufsystem kontinuierlich durchgeführt wird, aus den abgeführten Organopolysiloxanen der allgemeinen Formel 1 ein Teil der niedermolekularen linearen Organopolysiloxane durch Destillation entfernt wird und die Gemische linearer Organopolysiloxane 0 bis 60 Prozent an Organopolysiloxanen der allgemeinen Formel 1 aufweisen, bei denen n den Wert 0 bedeutet und höchstens 1 Gew.-% an cyclischen, niedermolekularen Organopolysiloxanen enthalten.

2. Verfahren nach Anspruch 1, bei dem die Konzentration an HCl in der abgeführten Salzsäure 18 bis 24 Gew.-% beträgt.

3. Verfahren nach Anspruch 1 oder 2, bei dem das erhaltene Destillat als Mischung mit Trimethylchlorsilan und Dimethyldichlorsilan in das Umlaufsystem zurückgeführt wird.

4. Verfahren nach Anspruch 1 bis 3, bei dem das erhaltene Destillat katalytisch rückgespalten wird und das erhaltene Spaltprodukt in das Umlaufsystem zurückgeführt wird.

## Claims

1. Process for preparing mixtures of linear organopolysiloxanes of the general formula 1
(CH₃)₃SiO- (Si (CH₃)₂O)ₙ-Si (CH₃)₃ (1),
where
n is 0 or an integer from 1 to 50,
in which trimethylchlorosilane and dimethyldichlorosilane are reacted with water which may, if desired, have been acidified with hydrochloric acid, where the concentration of HCl in the hydrochloric acid discharged is below 25% by weight,
characterized in that the reaction is carried out continuously in a closed circulating system, and some of the low-molecular-weight linear organopolysiloxanes are removed by distillation from the organopolysiloxanes discharged of the general formula 1, and the mixtures of linear organopolysiloxanes have from 0 to 60 per cent of organopolysiloxanes of the general formula 1 in which n is 0, and has not more than 1% by weight of cyclic, low-molecular-weight organopolysiloxanes.

2. Process according to Claim 1, in which the concentration of HCl in the hydrochloric acid discharged is from 18 to 24% by weight.

3. Process according to Claim 1 or 2, in which the distillate obtained is fed back into the circulation system in the form of a mixture with trimethylchlorosilane and dimethyldichlorosilane.

4. Process according to Claims 1 to 3, in which the distillate obtained is catalytically redissociated and the resultant cleavage product is fed back into the circulation system.

## Revendications

1. Procédé pour la préparation de mélanges d'organopolysiloxanes linéaires de formule générale 1
(CH₃)₃SiO-(Si(CH₃)₂O)ₙ-Si(CH₃)₃ (1)
dans laquelle
n signifie la valeur 0 ou un nombre entier de 1 à 50, dans lequel du triméthylchlorosilane et du diméthyldichlorosilane sont transformés, le cas échéant avec de l'eau chlorhydrique, la concentration en HCl dans l'acide chlorhydrique évacué étant inférieure à 25% en poids, caractérisé en ce que la transformation est réalisée en continu dans un système à circuit fermé, en ce qu'on élimine par distillation une partie des organopolysiloxanes de bas poids moléculaire à partir des organopolysiloxanes évacués de formule générale 1 et en ce que les mélanges d'organopolysiloxanes linéaires présentent 0 à 60% d'organopolysiloxanes de formule générale 1, dans lesquels n signifie la valeur 0 et au maximum 1% en poids d'organopolysiloxanes cycliques de bas poids moléculaire est contenu.

2. Procédé selon la revendication 1, dans lequel la concentration en HC1 dans l'acide chlorhydrique évacué est de 18 à 24% en poids.

3. Procédé selon les revendications 1 ou 2, dans lequel le distillat obtenu est recyclé sous forme de mélange avec du triméthylchlorosilane et du diméthyldichlorosilane dans le système à circuit fermé.

4. Procédé selon les revendications 1 à 3, dans lequel le distillat obtenu est redissocié catalytiquement et le produit de dissociation obtenu est recyclé dans le système à circuit fermé.
